# FASCICULE DE BREVET EUROPEEN

(11) **EP 3 676 441 B1**
(45) Date de publication et mention de la délivrance du brevet: **05.10.2022**
(21) Numéro de dépôt: 18769788.3
(22) Date de dépôt: 10.08.2018
(51) Int. Cl.: D06F 75/12, H04B 3/54, H04L 12/10, D06F 75/26

(54) **SYSTÈME ÉLECTROMÉNAGER COMPRENANT UNE TRANSMISSION BIDIRECTIONNELLE DE DONNÉES ENTRE UNE BASE ET UN APPAREIL**
BÜGELSYSTEM, DAS EINE BIDIREKTIONELLE DATENÜBERTRAGUNG ZWISCHEN BASIS UND BÜGELEISEN UMFASST
IRONING SYSTEM COMPRISING TWO-WAY DATA TRANSMISSION BETWEEN THE BASE AND IRON

(30) Priorité: 31.08.2017 EP 17188726
(43) Date de publication de la demande: 08.07.2020
(73) Titulaire: Laurastar SA, 1618 Châtel-St-Denis (CH)
(72) Inventeur: MONNERAT, Christophe, 1773 Russy (CH); DECASTEL, Sylvain, 1671 Remaufens (CH); SEYDOUX, Laurent, 1673 Gillarens (CH)
(74) Mandataire: Grosfillier, Philippe
(86) Numéro de dépôt international: PCT/IB2018/056043
(87) Numéro de publication internationale: WO 2019/043487

(56) Documents cités:
- EP-A1- 1 815 056
- FR-A1- 2 854 002
- US-A1- 2009 084 007

## Description

### Domaine de l'invention

L'invention concerne les systèmes électroménagers, en particulier les systèmes de repassage, qui comprennent un appareil, p.ex. un fer à repasser, relié à une base par un cordon. Elle concerne plus précisément la transmission bidirectionnelle de données le long du cordon.

### Etat de la technique

Dans la plupart des systèmes de repassage existants, le cordon comprend une première ligne électrique formée d'un ensemble de fils conducteurs pour la transmission en haute tension (HT) de la puissance de chauffage et une deuxième ligne électrique formée d'un autre ensemble de fils conducteurs pour l'alimentation en basse tension (BT) d'une carte électronique disposée dans le fer, en général au niveau de la poignée.

Par HT, on entend une tension nécessaire au chauffage du fer, p.ex. 220 V AC.

Par BT, on entend une tension suffisante pour assurer l'alimentation d'une carte électronique ou une communication bidirectionnelle entre la base et le fer, p.ex. 5 V ou 12 V DC.

Lorsque la base comprend un générateur de vapeur, le cordon comprend un tube flexible pour le transfert de la vapeur.

Dans certains systèmes de l'état de la technique, l'utilisateur peut modifier quelques paramètres de fonctionnement du générateur, comme p.ex. la pression. Toutefois, ces paramètres sont modifiés en agissant directement sur le générateur, par activation de boutons ou potentiomètres disposés sur celui-ci.

Pendant ce type d'opération, l'utilisateur doit déposer le fer ou tenir le fer dans une main et modifier les paramètres du générateur avec l'autre main. Dans tous les cas, ce genre de manipulation n'est pas aisée, voire dangereuse.

Pour éviter ces inconvénients et plus généralement pour contrôler la base directement depuis le fer, une ligne électrique supplémentaire peut être ajoutée dans le cordon, cette dernière étant adaptée pour assurer une transmission, en général bidirectionnelle, de données entre la base et le fer.

Le brevet EP 1 815 056 B1 et la demande de brevet US 2009/084007 décrivent des systèmes de repassage dans lesquels le cordon comprend une ligne de transmission de données.

Le brevet FR 2 854 002 A1 (SEB SA [FR]) 22 octobre 2004 (2004-10-22) décrit un appareil comportant au moins deux éléments communiquant entre eux de nombreuses informations par leur liaison électrique sans utiliser les brins de puissance et par un seul fil réservé à cette transmission .

Bien que les systèmes précités fonctionnent correctement, ils nécessitent toutefois la présence de trois ensembles de fils conducteurs et, le cas échéant, d'un tube pour la transmission de la vapeur.

Dans ce type de configuration, le cordon est relativement volumineux, encombrant et assez rigide. Ces caractéristiques ont pour effet d'entraver la manipulation du fer.

### Description de l'invention

La présente invention permet de remédier aux inconvénients précités.

A cet effet, elle concerne un système électroménager et une utilisation tels que définis dans les revendications.

L'invention concerne donc un système électroménager, p.ex. de repassage, comprenant un appareil, tel qu'un fer à repasser, relié à une base par un cordon constitué d'au moins :
- une première ligne électrique formée d'un premier ensemble de fils conducteurs pour la transmission HT d'une puissance de chauffage,
- une deuxième ligne électrique formée d'un deuxième ensemble de fils conducteurs pour l'alimentation BT d'une carte électronique disposée dans l'appareil,
- une troisième ligne électrique pour assurer une transmission bidirectionnelle de données entre la base et l'appareil ;
caractérisé par le fait que la troisième ligne électrique est formée du deuxième ensemble de fils conducteurs ; le système comprenant en outre un modulateur adapté pour moduler la tension et/ou le courant circulant dans le deuxième ensemble de fils conducteurs, de manière activer la deuxième ligne électrique et la troisième ligne électrique ou exclusivement la troisième ligne électrique.

Le fait que la deuxième et la troisième ligne électrique utilisent le même ensemble de fils conducteurs permet de réduire le diamètre du cordon, donc son encombrement, et sa rigidité.

Le modulateur est de préférence conçu pour permettre une transmission numérique de données, par exemple une succession de bits qui sont p.ex. générés de la manière suivante : 12 V = 1, 0 V = 0.

Selon une variante de l'invention, la base comprend un générateur de vapeur. Dans cette configuration, le cordon comprend un tube flexible, pour l'alimentation du fer en vapeur.

Alternativement ou en sus, la base peut contenir un réservoir de liquide. Dans cette configuration, le cordon comprend un tube flexible au travers duquel peut circuler le liquide.

L'invention concerne également une utilisation d'un système électroménager tel que défini précédemment et caractérisée par le fait que l'on transmet des données de la base vers l'appareil et vice-versa, par le biais du modulateur.

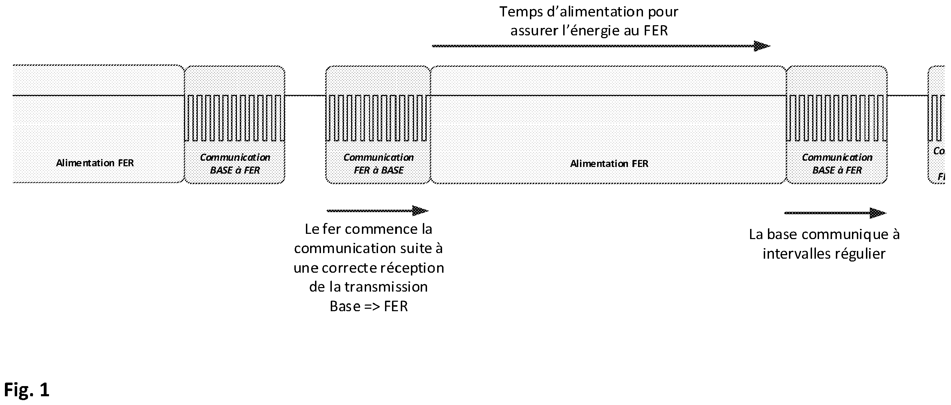

L'invention permet d'alimenter l'électronique de l'appareil sans nécessiter au sein de celui-ci la transformation d'une HT en BT. Dans le cadre de la présente invention, cette transformation est réalisée dans la base, de préférence au moyen d'un PCB et d'un limiteur de courant. Pour transmettre des données, la base envoie une information en modulant la tension comme indiqué précédemment. L'appareil, p.ex. le fer (voir figure 1) « répond » ensuite et donne des ordres à la base . Pendant la phase de réponse, l'alimentation de la carte électronique du fer est assurée par une source d'électricité disposée dans le fer, p.ex. une batterie ou un condensateur.

Pendant la phase de transmission des données dans le deuxième ensemble de fils conducteurs (activation de la troisième ligne électrique), l'état « 0 » est obtenu p.ex. en coupant la tension ; l'état « 1 » étant obtenu en maintenant une BT (p.ex. 12V ou 5V).

La figure 1 représente le mode de fonctionnement de la deuxième et troisième ligne électrique le long du deuxième ensemble de fils conducteurs.

Une séquence classique se déroule comme suit :
1- Alimentation continue de la carte électronique du fer sans communication pendant un temps défini (deuxième ligne électrique activée).
2- Initiation de la communication par la base (activation de la troisième ligne électrique, deuxième ligne toujours activée)
3- Une fois la communication correctement reçue, le fer répond directement (troisième ligne électrique activée, deuxième ligne électrique désactivée).
4- Relance d'un nouveau cycle à partir de l'étape 1 décrit précédemment.

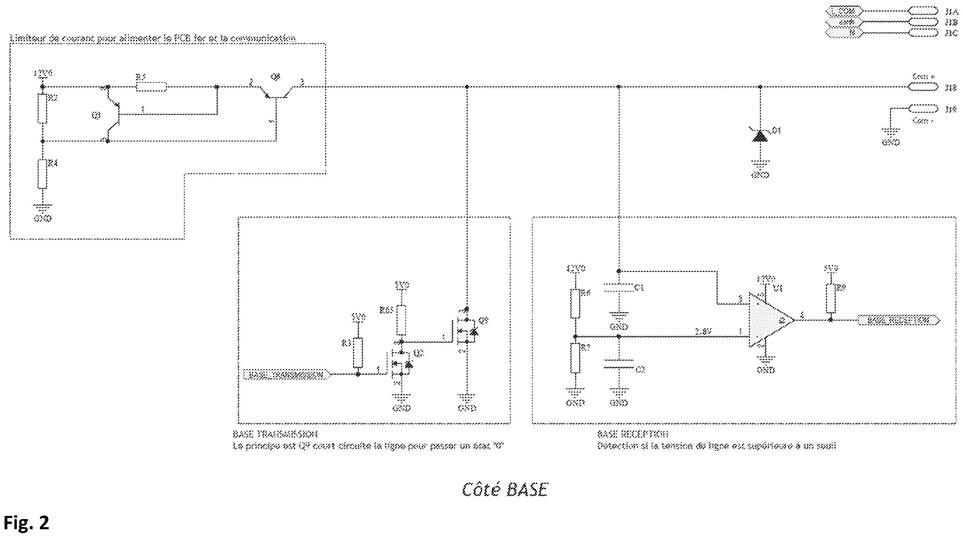

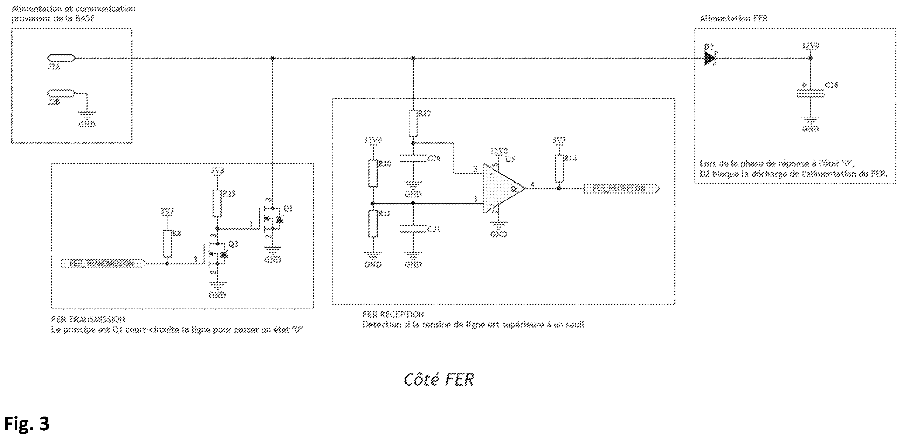

Les figures 2 et 3 illustrent des exemples de circuits électroniques utilisés dans le système selon l'invention, appliqué au domaine du repassage. La figure 2 illustre le circuit de la base et la figure 3 celui du fer.

Au niveau de la base (figure 2), un limiteur de courant est utilisé avec le deuxième ensemble de fils conducteurs (deuxième et troisième lignes électriques).

Le limiteur est actif pendant la transmission des données, uniquement pour transmettre un état « 0 ».

Pour transmettre un état, le fonctionnement est identique dans le fer ou la base.

Transmission d'un état « 0 » = court-circuit (donc 0V)

Transmission d'un état « 1 » = Q1 ou Q9 ouvert (p.ex. 5V ou 12V).

Pour la réception, le fonctionnement est identique dans le fer ou la base.

Un comparateur détecte si le niveau sur la ligne est « haut » (= « 1 ») ou « bas » (« 0 »).

Dans le fer, la partie « Alimentation FER » assure que lors de la communication, la capacité C26 ne se décharge pas par le court-circuit de ligne.

La HT peut être contrôlée par la base ou par le fer.

Le générateur de vapeur, et plus généralement la base, peut être pilotée en agissant uniquement sur le fer, p.ex. sur la poignée.

Il va sans dire que l'invention ne se limite pas aux cas de figure précités.

Comme indiqué, elle ne se limite pas aux systèmes de repassage, ni aux systèmes générant de la vapeur, mais couvre n'importe quel système électroménager comprenant un appareil relié à une base par un cordon au dans lequel sont localisés au moins deux ensembles de conducteurs, dont l'un au moins assure une communication bidirectionnelle entre la base et l'appareil.

## Revendications

1. Système électroménager comprenant un appareil, une base et un cordon reliant l'appareil à la base ; le cordon étant constitué d'au moins :
- une première ligne électrique formée d'un premier ensemble de fils conducteurs pour la transmission HT d'une puissance de fonctionnement de l'appareil,
- une deuxième ligne électrique formée d'un deuxième ensemble de fils conducteurs pour l'alimentation BT d'une carte électronique disposée dans l'appareil,
- une troisième ligne électrique, également formée du deuxième ensemble de fils conducteurs, pour assurer une transmission bidirectionnelle de données entre la base et l'appareil;
le système comprenant en outre un modulateur adapté pour moduler la tension et/ou le courant circulant dans le deuxième ensemble de fils conducteurs, de manière à activer séquentiellement la deuxième ligne électrique et la troisième ligne électrique ou à activer exclusivement la troisième ligne électrique ;
**caractérisé par le fait que** l'appareil comprend une source électrique indépendante de la base, adaptée pour alimenter la carte électronique de l'appareil lorsque la deuxième ligne électrique est désactivée.

2. Système selon la revendication 1 dans lequel la source électrique indépendante est une batterie.

3. Système selon la revendication 1 dans lequel la source électrique indépendante est un condensateur.

4. Système selon la revendication 1 dans lequel la base comprend un générateur de vapeur.

5. Système selon l'une quelconque des revendications précédentes dans lequel l'appareil comprend au moins un actionneur activable manuellement pour contrôler le fonctionnement de la base.

6. Utilisation d'un système électroménager tel que défini dans l'une quelconque des revendications précédentes **caractérisée par le fait que** l'on transmet des données de la base vers l'appareil et vice-versa.

7. Utilisation selon la revendication précédente, avec un générateur de vapeur, dans laquelle la pression du générateur est régulée depuis l'appareil.

8. Utilisation selon la revendication 6 ou 7 dans laquelle la puissance de fonctionnement de l'appareil est régulée depuis l'appareil.

## Patentansprüche

1. Elektrisches Haushaltsgerätsystem, das ein Gerät, eine Basis und eine Schnur enthält, die das Gerät mit der Basis verbindet; wobei die Schnur mindestens besteht aus:
- einer ersten elektrischen Leitung, die von einer ersten Einheit von Leiterdrähten zur Hochspannungsübertragung einer Betriebsleistung des Geräts gebildet wird,
- einer zweiten elektrischen Leitung, die von einer zweiten Einheit von Leiterdrähten zur Niederspannungsversorgung einer im Gerät angeordneten Elektronikkarte gebildet wird,
- einer dritten elektrischen Leitung, die ebenfalls von der zweiten Einheit von Leiterdrähten gebildet wird, um eine bidirektionale Datenübertragung zwischen der Basis und dem Gerät zu gewährleisten;
wobei das System außerdem einen Modulator enthält, der geeignet ist, die Spannung und/oder den in der zweiten Einheit von Leiterdrähten fließenden Strom zu modulieren, um die zweite elektrische Leitung und die dritte elektrische Leitung sequentiell zu aktivieren, oder um ausschließlich die dritte elektrische Leitung zu aktivieren;
**dadurch gekennzeichnet, dass** das Gerät eine von der Basis unabhängige Stromquelle enthält, die geeignet ist, die Elektronikkarte des Geräts zu versorgen, wenn die zweite elektrische Leitung deaktiviert ist.

2. System nach Anspruch 1, wobei die unabhängige Stromquelle eine Batterie ist.

3. System nach Anspruch 1, wobei die unabhängige Stromquelle ein Kondensator ist.

4. System nach Anspruch 1, wobei die Basis einen Dampferzeuger enthält.

5. System nach einem der vorhergehenden Ansprüche, wobei das Gerät mindestens ein manuell betätigbares Stellglied enthält, um den Betrieb der Basis zu steuern.

6. Verwendung eines wie in einem der vorhergehenden Ansprüche definierten elektrischen Haushaltsgerätssystems, **dadurch gekennzeichnet, dass** Daten von der Basis zum Gerät und umgekehrt übertragen werden.

7. Verwendung nach dem vorhergehenden Anspruch, mit einem Dampferzeuger, wobei der Druck des Erzeugers vom Gerät aus geregelt wird.

8. Verwendung nach Anspruch 6 oder 7, wobei die Betriebsleistung des Geräts vom Gerät aus geregelt wird.

## Claims

1. Household electrical system, comprising an appliance, a base and a cord connecting the appliance to the base, the cord consisting of at least:
- a first electrical line formed by a first set of conductive wires for the HV transmission of an operating power of the appliance,
- a second electrical line formed by a second set of conductive wires for the LV supply of power to a circuit board arranged in the appliance,
- a third electrical line, also formed by the second set of conductive wires, for providing two-way data transmission between the base and the appliance;
the system further comprising a modulator suitable for modulating the voltage and/or the current through the second set of conductive wires, so as to sequentially activate the second electrical line and the third electrical line or to exclusively activate the third electrical line;
**characterized in that** the appliance comprises an electricity source which is independent of the base and is suitable for supplying power to the circuit board of the appliance when the second electrical line is deactivated.

2. System according to Claim 1, wherein the independent electricity source is a battery.

3. System according to Claim 1, wherein the independent electricity source is a capacitor.

4. System according to Claim 1, wherein the base comprises a steam generator.

5. System according to any one of the preceding claims, wherein the appliance comprises at least one actuator that can be activated manually in order to control the operation of the base.

6. Use of a household electrical system such as is defined in any one of the preceding claims, **characterized in that** data are transmitted from the base to the appliance and vice versa.

7. Use according to the preceding claim, with a steam generator, wherein the pressure of the generator is regulated from the appliance.

8. Use according to Claim 6 or 7, wherein the operating power of the appliance is regulated from the appliance.
